# EUROPEAN PATENT APPLICATION

(11) **EP 1 737 275 A2**
(43) Date of publication of application: **27.12.2006**
(21) Application number: 06115798.8
(22) Date of filing: 21.06.2006
(51) Int. Cl.: H05B 33/08

(54) **Light emitting device using organic electroluminescent element**

(30) Priority: 22.06.2005 JP 2005182019
(71) Applicant: KABUSHIKI KAISHA TOYOTA JIDOSHOKKI, Kariya-shi, Aichi-ken 448-8671 (JP)
(72) Inventor: Okabe, Takanori, Kariya-shi, Aichi-ken Aichi 448-8671 (JP); Miura, Hiroyuki, Kariya-shi, Aichi-ken Aichi 448-8671 (JP); Iwata, Hiromu, Kariya-shi, Aichi-ken Aichi 448-8671 (JP); Noritake, Kazuto, Kariya-shi, Aichi-ken Aichi 448-8671 (JP); Ito, Hironori, Kariya-shi, Aichi-ken Aichi 448-8671 (JP)
(74) Representative: TBK-Patent

(57) **Abstract**

A light emitting device (10) may comprise a constant current source (12), a first organic electroluminescent element (16), switches (14, 20), and a second organic electroluminescent element (18). The first organic electroluminescent element (16) may be connected to the constant current source (12). The switches (14, 20) may switch the direction of a voltage applied from the constant current source (12) to the first electroluminescent element (16). The second organic electroluminescent element (18) may be connected in parallel with the first organic electroluminescent element (16). When reverse voltage is applied to the first organic electroluminescent element (16), electric current from the constant current source (12) flows to the second organic electroluminescent element (18) and the second organic electroluminescent element (18) generates an electric potential.

## Description

### Background of the Invention

### Field of the Invention

The present invention relates to a light emitting device that uses an organic electroluminescent element (hereinafter referred to as an organic EL element). More specifically, the present invention relates to a light emitting device that applies reverse voltage to the organic EL element during periods in which the organic EL element does not emit light.

### Description of the Related Art

An organic EL element is a light emitting element that comprises an organic light emitting layer, and an anode and cathode that sandwich the organic light emitting layer. When a voltage (forward voltage) is applied between the anode and the cathode of the organic EL element, electron holes are introduced from the anode toward the light emitting layer, and electrons are introduced from the cathode toward the light emitting layer. The light emitting material in the light emitting layer is excited thereby, and the organic EL element emits light.
Because an organic EL element can achieve high luminance at a low voltage, it is expected to be used as a light source for the display of electronic device. At present, organic EL elements are primarily used as backlights in transmissive liquid crystal monitors, e.g., backlights for liquid crystal display devices installed in electronic device such as computer displays, liquid crystal televisions, mobile telephones, and the like.

One problem in light emitting devices in which organic EL elements are used is the decline in light emission intensity caused by long term use. The decline in light emission intensity is thought to be caused by electric charge accumulating at the interface of the organic light emitting layer due to a trap. It is known that the application of reverse voltage to organic EL elements is an effective countermeasure to a decline in the light emission intensity of organic EL elements due to the accumulation of electric charge described above. For example, Japanese Laid-open Patent Publication No. 2001-203077 discloses a light emitting device that inhibits the decline in the light emission intensity of organic EL elements by driving the organic EL elements with alternating current, and sequentially applying forward voltage and reverse voltage to the organic EL elements.

Because the light emitting device described above drives organic EL elements with alternating current, the value of the electric current that flows to the organic EL elements changes while the forward voltage is applied to the organic EL elements (i.e., the period in which the organic EL elements emit light). The light emission intensity of the organic EL elements changes in accordance with the value of the electric current that flows to the organic EL elements. Thus, a problem with this light emitting device is that changing the value of the electric current that flows to the organic EL elements also changes the light emission intensity of the organic EL elements.

### Brief Summary of the Invention

The present invention has been made in order to solve the above mentioned problems of the conventional techniques, and it is therefore an object of the present invention to provide a light emitting device that can inhibit a decline in the light emission intensity of organic EL elements by applying reverse voltage to the organic EL elements, and can cause a constant electric current to flow to the organic EL elements when applying forward voltage to the organic EL elements.

In one aspect of the present invention, a light emitting device may comprise a constant current source, a first organic electroluminescent element, and switches. The first organic electroluminescent element may be connected to the constant current source. The switches may switch the direction of a voltage applied from the constant current source to the first electroluminescent element. The light emitting device may further include an electric potential difference generating means. The electric potential difference generating means is connected in parallel with the first organic electroluminescent element. When reverse voltage that extinguishes the first organic electroluminescent element is applied to the first organic electroluminescent element, electric current from the constant current source flows to the electric potential difference generating means and the electric potential difference generating means generates an electric potential difference.

In this light emitting device, the direction of the voltage applied to the first organic EL element is switched by means of the switches. When forward voltage is applied to the first organic EL element, electric current flows to the first organic EL element, and the first organic EL element emits light. Since the electric current is supplied from the constant current source to the first organic EL element, the electric current supplied to the first organic EL element can be made constant.
In contrast, when reverse voltage is applied to the first organic EL element, the first organic EL element is extinguished. At this time, almost no electric current flows to the first organic EL element, but electric current flows to the electric potential difference generating means connected in parallel to the first organic EL element, because the reverse impedance of the first organic EL element is extremely large. When electric current flows to the electric potential difference generating means, an electric potential difference is generated by the electric potential difference generating means. Thus, the electric potential on the cathode side of the first organic EL element becomes higher, and the electric potential on the anode side thereof becomes lower. Because of this, reverse voltage is applied to the first organic EL element, and the decline in the light emission intensity of the organic EL element can be inhibited.
With this light emitting device, the decline in the light emission intensity can be inhibited by applying reverse voltage to the first organic EL element, and a constant current can flow to the first organic EL element when forward voltage is applied to the first organic EL element.

In this specification, the application of voltage such that an anode of the organic EL element attains a higher potential than a cathode thereof is referred to as "the application of forward voltage", and the application of voltage such that the anode attains a lower potential than the cathode is referred to as "the application of reverse voltage".

Preferably, the electric potential difference generating means may comprise a second organic electroluminescent element. In this case, an anode of the second organic electroluminescence element is connected to a cathode of the first organic electroluminescence element, and a cathode of the second organic electroluminescence element is connected to an anode of the first organic electroluminescence element.
According to this configuration, reverse voltage is applied to the second organic EL element when forward voltage is applied to the first organic EL element, and reverse voltage is applied to the first organic EL element when forward voltage is applied to the second organic EL element. Thus, in the first and second organic EL elements, reverse voltage is applied in order to inhibit a decline in the light emission intensity thereof, and a constant electric current flows when forward voltage is applied.

In addition, a resistor may be utilized as the electric potential difference generating means. When the electric potential difference generating means comprises a resistor, a suitable reverse voltage can be applied to the first organic EL element by appropriately adjusting the resistance value thereof.
Further, in this case, the electric potential difference generating means may further include a diode that is connected in series with the resistor. For example, an anode of the diode is connected to a cathode of the first organic electroluminescence element via the resistor, and a cathode of the diode is connected to an anode of the first organic electroluminescence element; or an anode of the diode is connected to a cathode of the first organic electroluminescence element, and a cathode of the diode is connected to an anode of the first organic electroluminescence element via the resistor.
According to this configuration, almost no electric current flows to the electric potential difference generating means (i.e., the resistor and diode) when forward voltage is applied to the first organic EL element, but electric current flows to the electric potential difference generating means (i.e., the resistor and diode) when reverse voltage is applied to the first organic EL element. Because of this, power loss due to the electric potential difference generating means can be reduced.

In another aspect of the present invention, a light emitting device may comprise a plurality of organic electroluminescent elements, a constant current source, and a lighting control circuit. The constant current source is connected to each of the plurality of organic electroluminescent elements. The constant current source supplies electric current to each of the plurality of organic electroluminescent elements. The lighting control circuit switches the lighting and extinguishing of each of the plurality of organic electroluminescent elements. Each organic electroluminescent element is applied reverse voltage, during at least a portion of the time period in which each organic electroluminescent element is extinguished, by using forward voltage applied to another lit organic electroluminescent element.
In this light emitting device, because a constant current source is utilized, a constant electric current can flow to the organic EL elements. In addition, the forward voltage applied to the lit organic EL element is applied as reverse voltage to the extinguished organic EL element. Because of this, decline of the light emission intensity of each organic EL element can be inhibited by applying reverse voltage.

Furthermore, in this light emitting device, two of the plurality of organic electroluminescent elements may form a light emitting unit in which the two organic electroluminescent elements are connected in parallel. An anode of one of the organic electroluminescent elements of the light emitting unit may be connected to a cathode of the other organic electroluminescent element, and a cathode of the one organic electroluminescent element may be connected to an anode of the other organic electroluminescent element. Preferably, the lighting control circuit switches the direction of the voltage applied from the constant current source to the light emitting unit.
According to this configuration, reverse voltage is applied to the other organic EL element when forward voltage is applied to the one organic EL element, and forward voltage is applied to the other organic EL element when reverse voltage is applied to the one organic EL element. Therefore, forward voltage and reverse voltage can be efficiently applied to two organic EL elements that form a light emitting unit.

In another aspect of the present invention, the present invention provides a display device that can improve the quality of moving images. This display device may include a liquid crystal panel and a light emitting device. The liquid crystal panel may comprise a plurality of pixels and an image signal output circuit that outputs image signals to each pixel on each main scanning line. The light emitting device is arranged on the rear side of the liquid crystal panel in order to illuminate the liquid crystal panel from the rear side thereof. The light emitting device may comprise a plurality of organic electroluminescent elements, a constant current source that supplies electric current to each of the plurality of organic electroluminescent elements, and a lighting control circuit that switches the lighting and extinguishing of the plurality of organic electroluminescent elements. Each organic electroluminescent element is applied reverse voltage, during at least a portion of the time period in which each organic electroluminescent element is extinguished, by using forward voltage applied to another lit organic electroluminescent element. Further, the lighting control circuit preferably (1) extinguishes the organic electroluminescent elements corresponding to one main scanning line of the liquid crystal panel to which the data is output while image signals are output to each pixel on the one main scanning line, and (2) lights the organic electroluminescent elements corresponding to the main scanning line at a predetermined timing after the output of the image signals to the main scanning line is completed.
In this display device, while image signals are output to each pixel on the main scanning line of the liquid crystal panel (i.e., while data is being written thereto), the organic EL elements corresponding to the main scanning line are extinguished, and all or some of the other organic EL elements are lit. Then, the organic EL elements corresponding to the main scanning line are lit at the predetermined timing after the output of the image signals to each pixel on the main scanning line is completed (e.g., the timing at which the orientation of the liquid crystal molecules of each pixel to which image data was output is completed). Thus, the quality of moving images displayed on the liquid crystal panel can be improved.
In addition, the organic EL elements are lit and extinguished in synchronization with the scanning of the liquid crystal panel, and reverse voltage is applied in the periods in which the organic EL elements are extinguished. Therefore, reverse voltage is applied to the organic EL elements while the display device is being operated, and the decline in the light emission intensity of the organic EL elements can be inhibited.

In another aspect of the present invention, the present invention provides another display device that can display three dimensional images. This display device may have a plurality of organic electroluminescent elements, a liquid crystal panel, a lighting control circuit, and a directional transparent member (e.g., lenticular lens). The liquid crystal panel may be arranged on the front side of the plurality of electroluminescent elements. The liquid crystal panel may comprise a plurality of pixels and an image signal output circuit that outputs image signals to each pixel on each main scanning line of the liquid crystal panel. Each pixel displays an image via light from the plurality of organic electroluminescent elements. The lighting control circuit switches the lighting and extinguishing of the plurality of organic electroluminescent elements. The directional transparent member may be arranged on the front side of the liquid crystal panel. The directional transparent member directs the light from the organic electroluminescent elements through each pixel. Each organic electroluminescent elements may extend in a direction perpendicular to the main scanning line of the liquid crystal panel. The plurality of organic electroluminescent elements may be aligned in a direction parallel to the main scanning line of the liquid crystal panel. The lighting control circuit preferably (1) lights some of the plurality of the organic electroluminescent elements and extinguishes the remainder, and (2) applies reverse voltage to the extinguished organic electroluminescent elements, during at least a portion of the period in which the organic electroluminescent elements are extinguished, by using forward voltage applied to the other lit organic electroluminescent elements.
In this display device, the plurality of organic EL elements is aligned in a direction parallel to the main scanning line of the liquid crystal panel. Because of this, an image displayed on a liquid crystal panel can be made visible in different positions by changing the organic EL elements that are lit. Thus, a so-called three dimensional image can be displayed.
In addition, the organic EL elements are lit and extinguished in synchronization with the display of the images by the liquid crystal panel, and reverse voltage is applied in the periods in which the organic EL elements are extinguished. Therefore, reverse voltage is applied to the organic EL elements while the display device is being operated, and the decline in the light emission intensity of the organic EL elements can be inhibited.

These aspects and features may be utilized singularly or, in combination, in order to make improved light emitting device and display device. In addition, other objects, features and advantages of the present invention will be readily understood after reading the following detailed description together with the accompanying drawings and claims. Of course, the additional features and aspects disclosed herein also may be utilized singularly or, in combination with the above-described aspect and features.

### Brief Description of the Drawings

Fig. 1 schematically shows the configuration of a light emitting device of a first embodiment of the present invention.
Fig. 2 shows the changes in the voltage applied to each organic EL element of the light emitting device of the first embodiment, and changes in the electric current that flows in these elements.
Fig. 3 schematically shows the placement of organic EL elements that comprise a light emitting device of a second embodiment of the present invention.
Fig. 4 schematically shows the circuit configuration of the light emitting device of the second embodiment.
Fig. 5 is a timing chart that depicts the changes in the lighting state of each organic EL element of the second embodiment.
Fig. 6 is a schematic diagram that depicts the changes in the lighting state of each organic EL element of the second embodiment.
Fig. 7 schematically shows the circuit configuration of a light emitting device of a third embodiment of the present invention.
Fig. 8 shows the general configuration of a display device of a fourth embodiment of the present invention.
Fig. 9 shows the timing at which an organic EL element of the fourth embodiment is lit.
Fig. 10 shows the general configuration of a display device of a fifth embodiment of the present invention.
Fig. 11 shows the general configuration of the display device of the fifth embodiment.
Fig. 12 shows a modification of the first embodiment.
Fig. 13 shows another modification of the first embodiment.
Fig. 14 shows another modification of the first embodiment.

### Detailed Description of the Invention

Preferred features to practice the present invention are described below. (Feature 1) A light emitting device comprises a constant current source, a first organic EL element, a second organic EL element, a first switch, and a second switch. The first organic EL element is connected in parallel with the second organic EL element. An anode of the first organic EL element is connected to a cathode of the second EL element, and a cathode of the first organic EL element is connected to an anode of the second organic EL element. A positive terminal of the constant current source is connected to the first and second organic EL elements via the first switch. A negative terminal of the constant current source is connected to the first and second organic EL elements via the second switch.
The first switch switches between a first state in which the positive terminal of the constant current source is connected to the anode of the first organic EL element and the cathode of the second organic EL element, and a second state in which the positive terminal of the constant current source is connected to the cathode of the first organic EL element and the anode of the second organic EL element.
The second switch switches between a third state in which the negative terminal of the constant current source is connected to the cathode of the first organic EL element and the anode of the second organic EL element, and a fourth state in which the negative terminal of the constant current source is connected to the anode of the first organic EL element and the cathode of the second organic EL element.
When the second switch is switched to the third state and the first switch is switched to the first state, the first organic EL element emits light and reverse voltage is applied to the second organic EL element. In contrast, when the second switch is switched to the fourth state and the first switch is switched to the second state, the second organic EL element emits light and reverse voltage is applied to the first organic EL element.

(Feature 2) A light emitting device comprises a constant current source, a first organic EL element, a second organic EL element, ... nth organic EL element, a group of first switches that selectively connect the anode of each organic EL element with both terminals of the constant current source, and a group of second switches that selectively connect the cathode of each organic EL element with both terminals of the constant current source. The first organic EL element to the nth organic EL element are connected in parallel with the constant current source.
The group of first switches and the group of second switches switch to a state in which anodes of some of the first organic EL element to the nth organic EL element are connected to the positive terminal of the constant current source, and the cathodes thereof are connected to the negative terminal of the constant current source. The anodes of all or some of the remaining first organic EL element to the nth organic EL element are simultaneously connected to the negative terminal of the constant current source, and the cathode thereof are connected to the positive terminal of the constant current source.

### (First Embodiment)

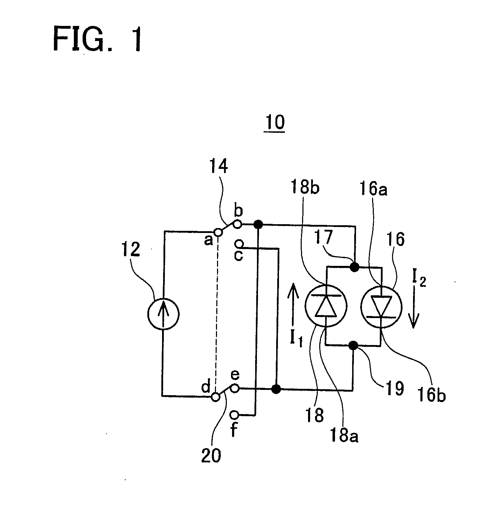

A first embodiment of the present invention will now be explained with reference to the figures. As shown in Fig. 1, a light emitting device 10 comprises a constant current source 12, a first organic EL element 16, and a second organic EL element 18.

The first organic EL element 16 may comprise an anode 16a, an organic light emitting layer, and a cathode 16b. The first organic EL element 16 may be formed as a bottom emission type, in which light emitted from the organic light emitting layer is extracted from a substrate side.
The substrate is a plate shaped member that serves to support the first organic EL element 16, and a transparent substrate that exhibits a high transmission factor with respect to light extracted therefrom may be used as the substrate. For example, a glass substrate that exhibits a high transmission factor in a visible light spectrum, a transparent resin substrate that is constructed from a transparent acrylic resin or a polyethylene terephthalate resin, or the like, may be used.
The anode 16a is formed with a conductive metal oxide material, and for example, ITO (indium tin oxide), IZO (indium zinc oxide), ZnO (zinc oxide), SnO₂ (tin oxide), or the like may be used.
A luminescent material such as Alq3 can be used as the organic light emitting layer to achieve structures that exhibit monochromatic light that is red, green, blue, yellow or another color, and to achieve other structures that exhibit a luminous color, such as white light, through a combination of the monochromatic light structures. Examples of configurations that exhibit white light include a laminated structure laminated with two or three light emitting layers, a compound structure that compounds different light emitting materials into one light emitting layer, and a divided structure in which one light emitting layer is divided into plural sub pixels with different color. In addition, a functional layer such as a charge (electron hole, electron) injection layer, a charge (electron hole, electron) transport layer, a block layer, and the like may also be combined as needed.
A reflecting electrode that reflects at least visible light and that is made from, for example, metal such as aluminum, gold, silver, copper, chrome, etc. or an alloy thereof, may be utilized as the cathode 16b.
A protective portion that serves to protect the organic light emitting layer from oxygen and moisture may be arranged on the outer side of the cathode 16b. The protective portion may be formed from a passivation film, a sealing can, or a combination thereof.
The anode 16a, the organic light emitting layer, the cathode 16b, and the protective portion described above can be formed by using, as appropriate, a known thin film formation method such as the vacuum deposition method, the sputter method, and the like.

The second organic EL element 18 may be constructed in the same way as the first organic EL element 16. The second organic EL element 18 is connected in parallel with the first organic EL element 16. An anode 18a of the second organic EL element 18 is connected to the cathode 16b of the first organic EL element 16, and a cathode 18b of the second organic EL element 18 is connected to the anode 16a of the first organic EL element 16.

The constant current source 12 comprises a positive terminal and a negative terminal, and supplies a direct and constant electric current. The positive terminal of the constant current source 12 is connected to the first organic EL element 16 and the second organic EL element 18 via a switch 14. The negative terminal of the constant current source 12 is connected to the first organic EL element 16 and the second organic EL element 18 via a switch 20.

The switch 14 is a changeover switch, and switches between an a-b conductive state and an a-c conductive state. When the switch 14 conducts electricity between a and b, the positive terminal of the constant current source 12 is connected to a connection point 17 between the first organic EL element 16 and the second organic EL element 18. Thus, the positive terminal of the constant current source 12 is connected to the anode 16a of the first organic EL element 16 and the cathode 18b of the second organic EL element 18. When the switch 14 conducts electricity between a and c, the positive terminal of the constant current source 12 is connected to a connection point 19 between the first organic EL element 16 and the second organic EL element 18. Thus, the positive terminal of the constant current source 12 is connected to the cathode 16b of the first organic EL element 16 and the anode 18a of the second organic EL element 18.

The switch 20 is also a changeover switch, and switches between a d-e conductive state and a d-f conductive state. When the switch 20 conducts electricity between d and e, the negative terminal of the constant current source 12 is connected to the connection point 19. Thus, the negative terminal of the constant current source 12 is connected to the cathode 16b of the first organic EL element 16 and the anode 18a of the second organic EL element 18. When the switch 20 conducts electricity between d and f, the negative terminal of the constant current source 12 is connected to the connection point 17. Thus, the negative terminal of the constant current source 12 is connected to the anode 16a of the first organic EL element 16 and the cathode 18b of the second organic EL element 18.

The switches 14 and 20 synchronously change their states. In the present embodiment, the switch 20 conducts electricity between d and e when the switch 14 is placed into a state in which electricity is conducted between a and b, and the switch 20 conducts electricity between d and f when the switch 14 is placed into a state in which electricity is conducted between a and c.
Any method may be used to synchronize the switches 14 and 20. For example, a configuration may be used in which the switch 20 is mechanically linked with the switch 14 in order to switch the states thereof, or each switch may be operated such that the switches 14 and 20 are always switched in synchronization with each other.

Next, the operation of the light emitting device 10 will be described. First, in order to operate the light emitting device 10, the switch 14 is placed in a state in which electricity is conducted between a and b, and the switch 20 is placed in a state in which electricity is conducted between d and e. In this state, the positive terminal of the constant current source 12 is connected to the anode 16a of the first organic EL element 16 and the cathode 18b of the second organic EL element 18, and the negative terminal of the constant current source 12 is connected to the cathode 16b of the first organic EL element 16 and the anode 18a of the second organic EL element 18. Therefore, forward voltage is applied to the first organic EL element 16, and electron holes and electrons are introduced into the organic light emitting layer thereof in order to emit light. In addition, reverse voltage is applied to the second organic EL element 18, and electric charge that has accumulated at the interface of the organic light emitting layer is removed.

Here, the organic EL elements have an extremely large impendence with respect to the reverse voltage, in contrast with the impedance with respect to the forward voltage. Because of this, almost none of the electric current that is supplied from the constant current source 12 flows to the second organic EL element 18, but flows to the first organic EL element 16. Therefore, a constant electric current flows to the first organic EL element 16, and the first organic EL element 16 can emit light with a uniform light emission intensity.
In addition, when electric current flows in the forward direction to the first organic EL element 16, an electric potential difference is generated between the anode 16a and the cathode 16b of the first organic EL element 16. This electric potential difference becomes an electric potential difference between the cathode 18b and the anode 18a of the second organic EL element 18. Therefore, the value of the reverse voltage of the second organic EL element 18 is the electric potential difference generated by the electric current that flows to the first organic EL element 16. Because the impedance with respect to the forward voltage of the organic EL elements is not very large, the electric potential difference generated by the electric current that flows to the first organic EL element 16 is not excessive. Because of this, the reverse voltage applied to the second organic EL element 18 is moderate in value, and dose not deteriorate the second organic EL element 18.

When a predetermined time period expires in the aforementioned state, the switch 14 switches to a state in which electricity is conducted between a and c, and in synchronization therewith, the switch 20 switches to a state in which electricity is conducted between d and f. Because of this, the positive terminal of the constant current source 12 is connected to the cathode 16b of the first organic EL element 16 and the anode 18a of the second organic EL element 18, and the negative terminal of the constant current source 12 is connected to the anode 16a of the first organic EL element 16 and the cathode 18b of the second organic EL element 18. Therefore, reverse voltage is applied to the first organic EL element 16, and electric charge that has accumulated at the interface of the organic light emitting layer thereof is removed. In addition, forward voltage is applied to the second organic EL element 18, and electron holes and electrons are introduced into the organic light emitting layer thereof in order to emit light.
Note that in this state as well, a constant electric current flows to the second organic EL element 18, and light is emitted at a constant light emission intensity. In addition, the value of the reverse voltage applied to the first organic EL element 16 is the electric potential difference generated by the electric current that flows to the second organic EL element 18, and is moderate in value.

The state in which the switch 14 conducts electricity between a and b and the switch 20 conducts electricity between d and e is alternately changed over to the state in which the switch 14 conducts electricity between a and c and the switch 20 conducts electricity between d and f. Thus, forward voltage and reverse voltage are alternately applied to the first and second organic EL elements 16 and 18, and the first and second organic EL elements 16 and 18 respectively and repeatedly emit light and extinguish.

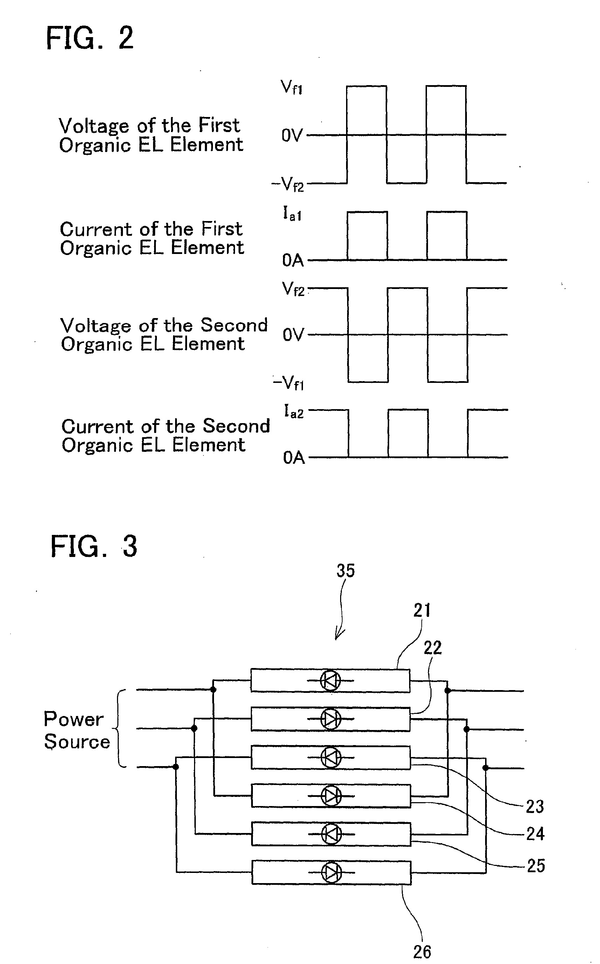

Fig. 2 depicts the temporal change in the voltage applied to the first and second organic EL elements 16 and 18, and the electric current that flows to the first and second organic EL elements 16 and 18.
As is clear from Fig. 2, forward voltage and reverse voltage are alternately applied to the first organic EL element 16 and the second organic EL element 18. In other words, when forward voltage V_{f1} is applied to the first organic EL element 16, reverse voltage V_{f1} is applied to the second organic EL element 18, and when forward voltage V_{f2} is applied to the second organic EL element 18, reverse voltage V_{f2} is applied to the first organic EL element 16. Therefore, while the first organic EL element 16 and the second organic EL element 18 alternately emit light and extinguish, the electric potential of the other organic EL element is applied as reverse voltage.
In addition, as is clear from Fig. 2, during the periods in which forward voltage is applied to the first and second organic EL elements 16 and 18, electric currents Iₐ₁, Iₐ₂ that flow to the organic EL elements 16 and 18 are constant, and these organic EL elements 16 and 18 emit light with a uniform light emission intensity.

Note that when the switches 14 and 20 are pulse driven with pulses at a frequency of 60 Hz or higher, and the first and second organic EL elements 16 and 18 are alternately and repeatedly lit and extinguished, the first and second EL elements 16 and 18 appear to be continuously lit to the human eye. Because of this, the light emitting device 10 can be employed as a continuous illumination device.

As described above, with the light emitting device 10 of the present embodiment, the strength of the electric current that is supplied to each organic EL element 16, 18 is made constant by employing the constant current source 12, and each organic EL element 16 and 18 can be made to emit light with a uniform light emitting intensity.
In addition, the electric potential of both terminals of the lit organic EL element 18 or 16 is applied as reverse voltage to the extinguished organic EL element 16 or 18. Because of this, the reverse voltage applied to the organic EL element 16 or 18 is moderate in value, and a decline in the light emission intensity of the organic EL element 16 or 18 is inhibited. As a result of this, the light emitting device 10 can maintain a high light emission intensity over a long period of time.

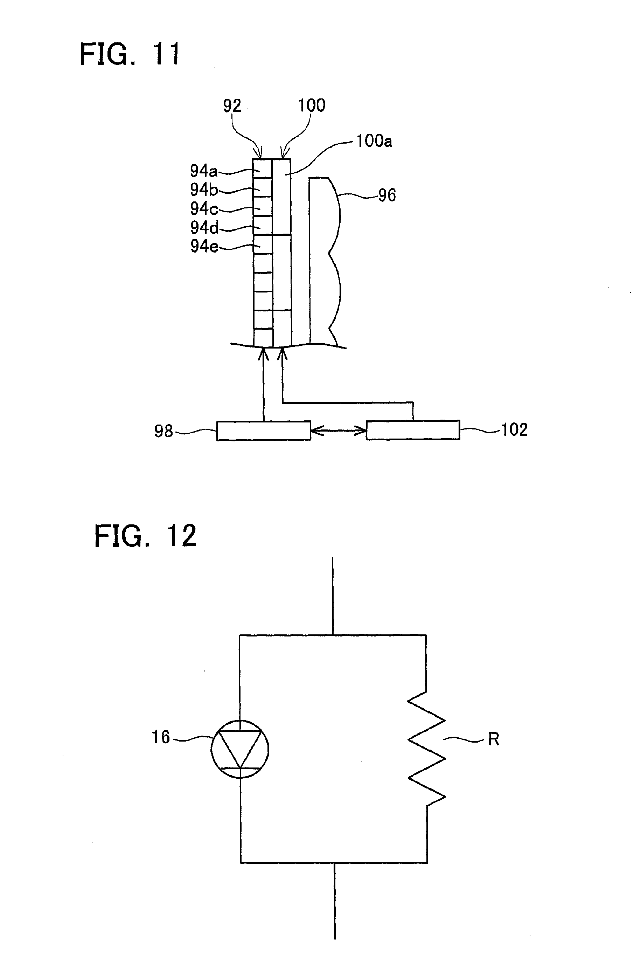

In the embodiment described above, the second organic EL element 18 is connected in parallel with the first organic EL element 16, but the present invention is not limited to this configuration. For example, as shown in Figure 12, a resistor R may be connected in parallel with the organic EL element 16. With this type of configuration, when reverse voltage is applied to the organic EL element 16 from a constant current source, the electric current from the constant current source flows to the resistor R. Because of this, even if a constant current source is employed to apply reverse voltage to the organic EL element 16, an excessive reverse voltage is not applied to the organic EL element 16. In other words, when an organic EL element is connected to a constant current source, and one attempts to apply reverse voltage to the organic EL element, excessive voltage is applied to the organic EL element as reverse voltage because the impedance of the organic EL element with respect to the reverse voltage is extremely high. When an excessive reverse voltage is applied to the organic EL element, the durability of the organic EL element is severely damaged. However, as shown in Fig. 12, by connecting the resistor R in parallel with the organic EL element 16, the electric current can flow to the resistor R from the constant current source, and excessive voltage can be prevented from being applied to the organic EL element 16, even if a constant current source is employed to apply reverse voltage to the organic EL element 16.

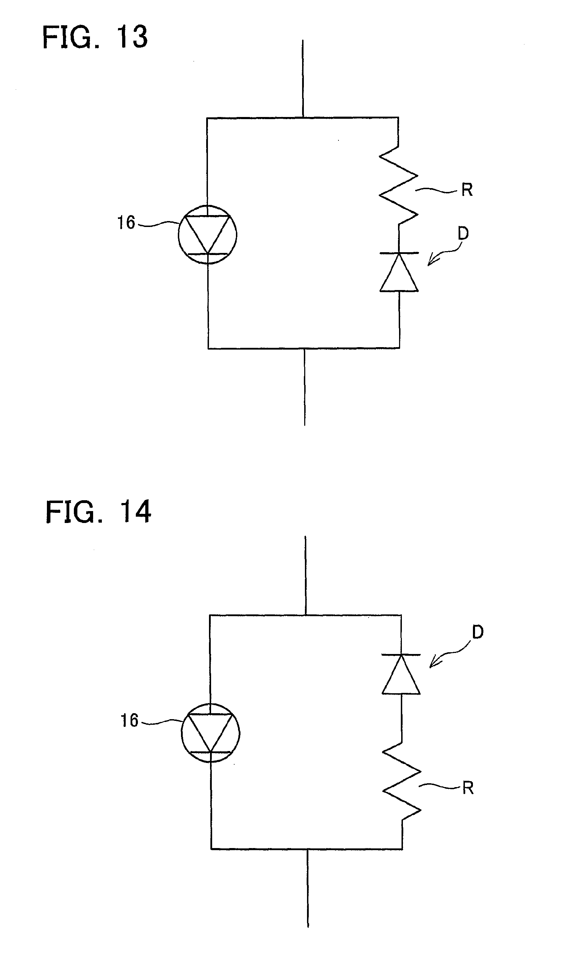

Furthermore, as shown in Fig. 13, a resistor R, and a diode D that is connected in series with the resistor R, may also be employed. When a combination of the resistor R and the diode D is used, the anode of the diode D is connected to the cathode of the organic EL element 16, and the cathode of the diode D is connected to the anode of the organic EL element 16 via the resistor R. According to this type of configuration, when forward voltage is applied to the organic EL element 16, the electric current hardly flows through the resistor R and the diode D, and thus the consumption of wasteful electric power is inhibited.
Furthermore, as shown in Fig. 14, a resistor R, and a diode D that is connected in series with the resistor R, may also be employed. When a combination of the resistor R and the diode D is used, the anode of the diode D is connected to the cathode of the organic EL element 16 via the resistor R, and the cathode of the diode D is connected to the anode of the organic EL element 16. According to this type of configuration, when forward voltage is applied to the organic EL element 16, the electric current hardly flows through the resistor R and the diode D, and thus the consumption of wasteful electric power is inhibited.

### (Second Embodiment)

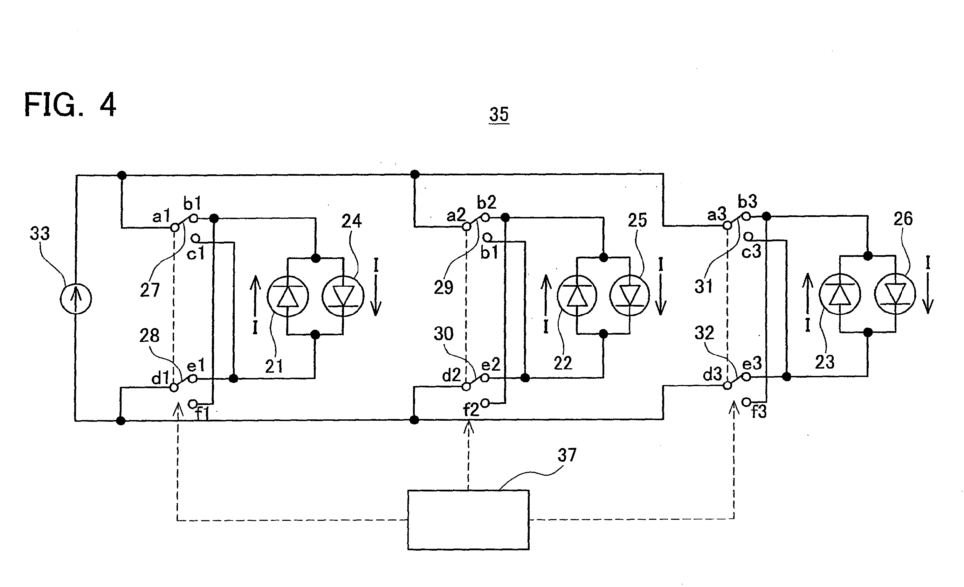

Next, a light emitting device 35 according to a second embodiment will be described. As shown in Fig. 3, the light emitting device 35 comprises a plurality of organic EL elements 21-26. The organic EL elements 21-26 are formed so that the light emitting surfaces thereof are in a strip shape or linear shape. The organic EL elements 21-26 are arranged such that the longitudinal direction of each is horizontal, and are aligned in the vertical direction.
As is clear from Fig. 3, the organic EL element 21 is connected in parallel with the organic EL element 24 in order to form a light emitting unit, and both terminals thereof are connected to a constant current source 33 (see Fig. 4). Likewise, the organic EL element 22 is connected in parallel with the organic EL element 25 in order to form a light emitting unit, and both terminals thereof are connected to the constant current source 33. In addition, the organic EL element 23 is connected in parallel with the organic EL element 26 in order to form a light emitting unit, and both terminals thereof are connected to the constant current source 33.
Note that the configuration of the organic EL elements 16 and 18 of the first embodiment can be used as the configuration of the organic EL elements 21-26.

The circuit configuration of the light emitting device 35 is depicted in Fig. 4. As shown in Fig. 4, the organic EL elements 21 and 24 are connected to the constant current source 33 via switches 27 and 28, the organic EL elements 22 and 25 are connected to the constant current source 33 via switches 29 and 30, and the organic EL elements 23 and 26 are connected to the constant current source 33 via switches 31 and 32. The connection configuration between the organic EL elements 21 and 24 and the constant current source 33, the connection configuration between the organic EL elements 22 and 25 and the constant current source 33, and the connection configuration between the organic EL elements 23 and 26 and the constant current source 33, are the same as that of the first embodiment described above. In addition, the light emitting unit constructed by the organic EL elements 21 and 24, the light emitting unit constructed by the organic EL elements 22 and 25, and the light emitting unit constructed by the organic EL elements 23 and 26, are connected in parallel with the constant current source 33.
Note that the switching of the switches 27 to 32 is performed by a control circuit 37. The switch 27 and the switch 28 are synchronously switched, the switch 29 and the switch 30 are synchronously switched, and the switch 31 and the switch 32 are synchronously switched.

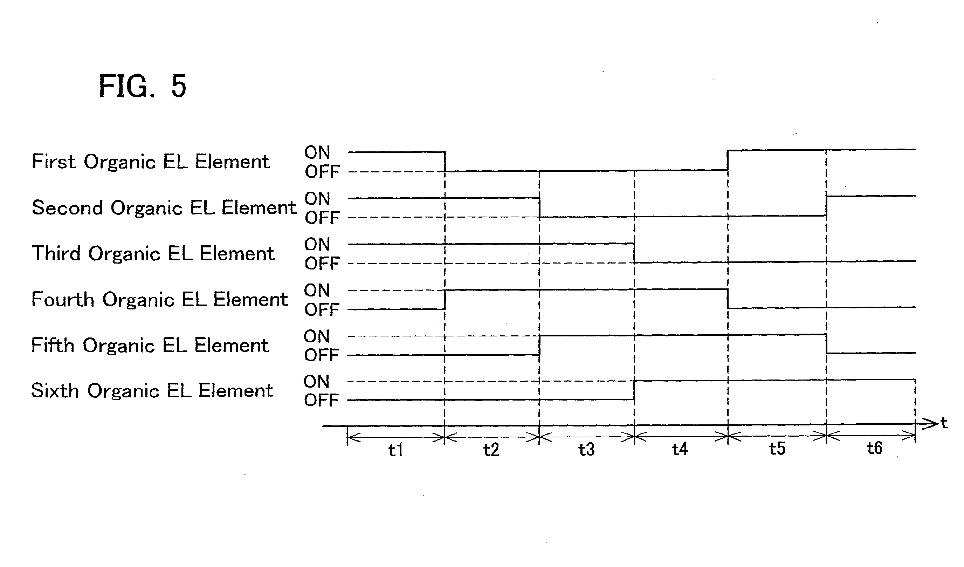

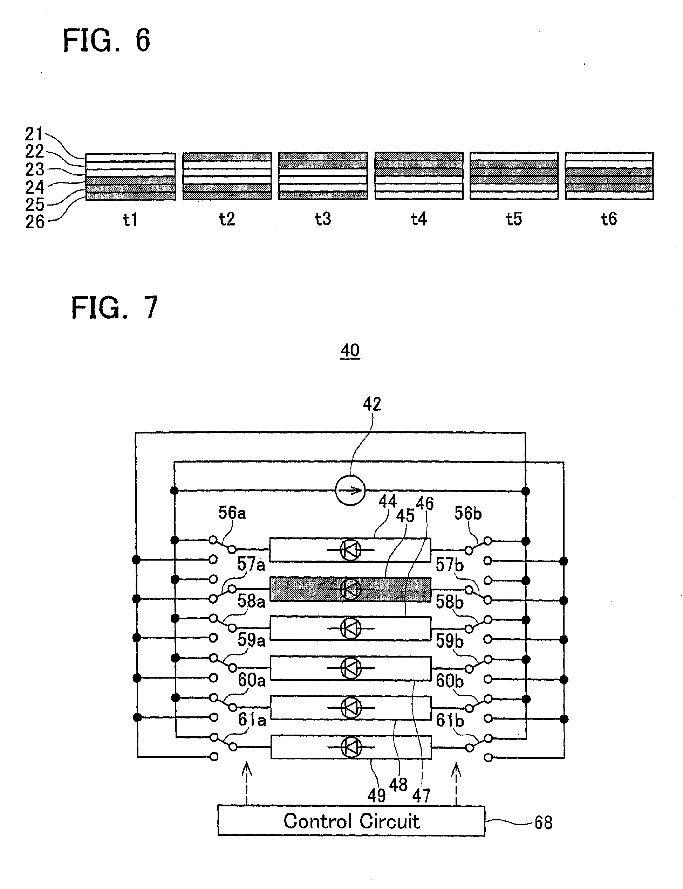

Fig. 5 depicts the temporal change of the lighting and extinguishing of the organic EL elements 21 to 26, and Fig. 6 schematically depicts the lit state of the organic EL elements 21 to 26 at each timing depicted in Fig. 5. Note that in Fig. 5, the organic EL element 21 is represented by a first organic EL element, the organic EL element 22 is represented by a second organic EL element, the organic EL element 23 is represented by a third organic EL element, the organic EL element 24 is represented by a fourth organic EL element, the organic EL element 25 is represented by a fifth organic EL element, and the organic EL element 26 is represented by a sixth organic EL element. In addition, in Fig. 6, the extinguished organic EL elements are depicted in color.

As shown in Figs. 5 and 6, in period t1, the organic EL elements 21, 22, 23 are lit, and the organic EL elements 24, 25, 26 connected in parallel with the organic EL elements 21, 22, 23 are extinguished. The electric potential difference between the anodes and cathodes of the lit organic EL elements 21, 22, 23 is applied as reverse voltage to the extinguished organic EL elements 24, 25, 26.
Next, in period t2, the organic EL elements 22, 23, 24 are lit, and the organic EL elements 25, 26, 21 connected in parallel with the organic EL elements 22, 23, 24 are extinguished. Reverse voltage is applied to the extinguished organic EL elements 25, 26, 21 in the same way as in period t1.
In the same way, the lit organic EL elements are sequentially changed, and the organic EL elements to which reverse voltage is applied in response thereto are also sequentially changed.

As is clear from the above description, with the light emitting device 35 of the second embodiment, each organic EL element 21 to 26 is repeatedly lit and extinguished, and reverse voltage is applied thereto while extinguished. Thus, a decline in the light emission intensity of the organic EL elements 21 to 26 can be inhibited.
In addition, electric current is supplied from the constant current source 33 to the organic EL elements 21 to 26, and three organic EL elements are lit during each period t1 to t6. Because of this, an electric current of uniform intensity flows to the lit organic EL elements 21 to 26, and the light emission intensity thereof can be made uniform.
Furthermore, although the constant current source 33 is employed to apply reverse voltage to the organic EL elements 21 to 26, two organic EL elements (21, 24), (22, 25), (23, 26) are connected in a parallel manner to form one light emitting unit, and thus the reverse voltage of each organic EL element 21 to 26 is not excessive, and the deterioration of the elements can be prevented.

### (Third Embodiment)

Next, a light emitting device 40 according to a third embodiment will be described. As shown in Fig. 7, the light emitting device 40 comprises a constant current source 42, and a plurality of organic EL elements 44-49. Like in the second embodiment, the organic EL elements 44 to 49 are also formed so that the light emitting surfaces thereof are in a strip shape or linear shape. The organic EL elements 44 to 49 are also arranged such that the longitudinal direction of each is horizontal, and are aligned in the vertical direction.

The anodes of each organic EL element 44 to 49 are respectively connected to the constant current source 42 via switches 56b to 61b. The switches 56b to 61b switch between a state in which the anodes of the organic EL elements 44 to 49 are connected to the positive terminal of the constant current source 42, and a state in which they are connected to the negative terminal thereof.
The cathodes of each organic EL element 44 to 49 are respectively connected to the constant current source 42 via switches 56a to 61a. The switches 56a to 61a switch between a state in which the cathodes of the organic EL elements 44 to 49 are connected to the positive terminal of the constant current source 42, and a state in which they are connected to the negative terminal thereof.

The switches 56a, 56b arranged on both electrodes of the organic EL element 44 are synchronously switched. For example, when the anode of the organic EL element 44 is connected to the positive terminal of the constant current source 42, the cathode of the organic EL element 44 is connected to the negative terminal of the constant current source 42, and forward voltage is applied to the organic EL element 44. By synchronously switching the switches 56a, 56b, forward voltage and reverse voltage can be applied to the organic EL element 44.
Likewise, each switch 57b to 61b of the organic EL elements 45 to 49 are also synchronously switched with the corresponding switches 57a to 61a. Thus, forward voltage and reverse voltage are applied to the organic EL elements 45 to 49.

Switching of the switches 56a to 61a and the switches 56b to 61b are performed by the control circuit 68. In the present embodiment, the switches 56a to 61a and the switches 56b to 61b are switched so that reverse voltage is applied to one of the organic EL elements 44 to 49, and forward voltage is applied to the other organic EL elements. In the example shown in Fig. 7, reverse voltage is applied to the organic EL element 45, and forward voltage is applied to the organic EL elements 44, 46-49.

In the embodiment described above, electric current is supplied from the constant current source 42 to each organic EL element 44 to 49, and thus an electric current of constant intensity flows to each organic EL element 44 to 49, and each organic EL element 44 to 49 uniformly emits light. In addition, the electric potential difference when reverse voltage is applied to each organic EL element 44 to 49 is the electric potential difference of both electrodes of the lit organic EL elements, and is not excessive. Because of this, even if the organic EL elements 44 to 49 are driven with the constant current source 42, an excessive reverse voltage is not applied to the organic EL elements 44 to 49, and deterioration of the organic EL elements 44 to 49 can be prevented.

Note that in the third embodiment described above, one of the organic EL elements 44 to 49 is extinguished, and all of the remaining elements are lit. However, the number of organic EL elements that are extinguished can be appropriately adjusted. For example, two or more of the organic EL elements 44 to 49 may be extinguished, and the remaining elements may be lit. In addition, reverse voltage may be applied during the entire period in which the organic EL elements 44 to 49 are extinguished, but reverse voltage may also be applied in a portion of that period. In other words, the application of reverse voltage to the organic EL elements may be performed only when needed in order to remove electric charge accumulated in the interfaces of the organic light emitting layers of the organic EL elements.

### (Fourth Embodiment)

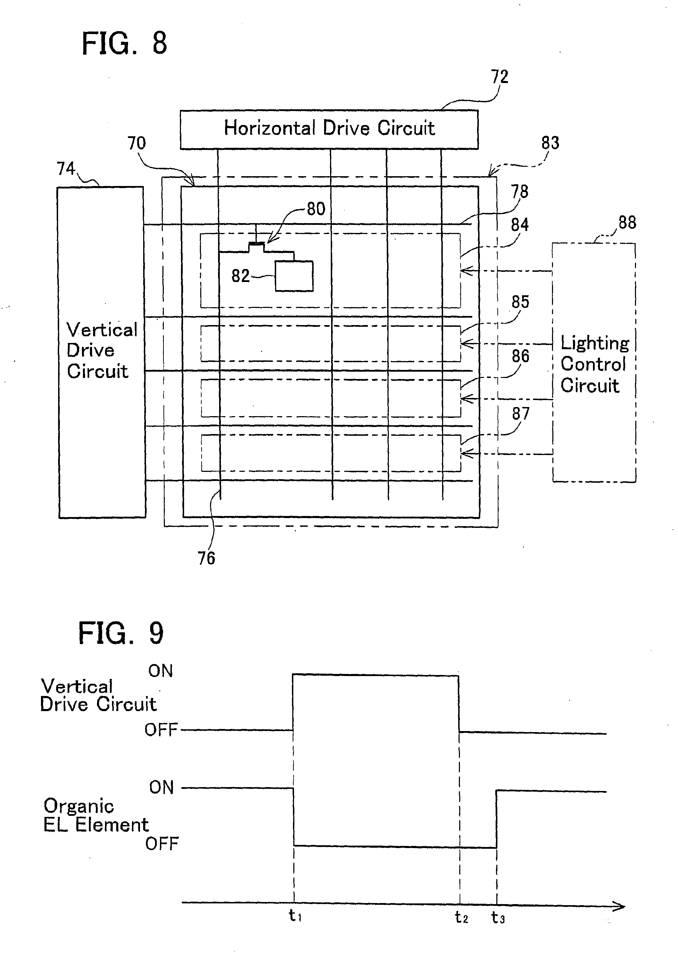

Next, a display device according to a fourth embodiment will be described. As shown in Fig. 8, the display device according to the fourth embodiment comprises a liquid crystal panel 70, and a backlight 83 that is arranged on the rear of the liquid crystal panel 70.
The liquid crystal panel 70 is a well known active matrix type liquid crystal display, and has a plurality of main scanning lines 78 that extend from a vertical drive circuit 74 in the horizontal direction (i.e., sub scanning direction), and a plurality of sub scanning lines (signal lines) 76 that extend from a horizontal drive circuit 72 in the vertical direction (i.e., main scanning direction). Pixel electrodes 82 are arranged via a transistor 80 at the intersection of the sub scanning lines 76 and the main scanning lines 78. Therefore, a plurality of pixel electrodes 82 are arranged on the liquid crystal panel 70 (i.e., a plurality of pixels are provided).

In order to display an image on the liquid crystal panel 70, an image signal (image data) is output from the horizontal drive circuit 72 to each signal line 76, in state in which one main scanning line 78 is selected by the vertical drive circuit 74 (i.e., a state in which a transistor 80 connected to the selected main scanning line 78 is turned on). Thus, a voltage corresponding to the image signal is applied to the pixel electrode 82 corresponding to the selected main scanning line 78, and the liquid crystal molecules of that pixel are oriented in response to the voltage applied thereto. An image is displayed on the liquid crystal panel 70 by selecting the main scanning lines 78 and outputting the image signals as described above.

The backlight 83 comprises a plurality of organic EL elements 84 to 87. Each organic EL elements 84 to 87 has strip-shaped or linear light emitting surfaces that extend in the horizontal direction and correspond to each main scanning line 78 of the liquid crystal panel 70. In other word, each organic EL elements 84 to 87 extends in a direction parallel to the main scanning line 78, and the plurality of organic EL elements 84 to 87 are aligned in the vertical direction of the main scanning line 78. The light emitting device disclosed above in the second or third embodiment can be employed in the backlight 83.

The lighting and extinguishing of the plurality of organic EL elements 84 to 87 is controlled by a lighting control circuit 88. The lighting control circuit 88 controls the lighting of the organic EL elements 84 to 87 in response to the output of image signals of the liquid crystal panel 70. For example, as shown in Fig. 9, when one main scanning line 78 of the liquid crystal panel 70 is selected (ON) by the vertical drive circuit 74, the organic EL element 84 corresponding to that main scanning line 78 is extinguished. Then, when a predetermined time period has expired (the time for each liquid crystal molecule to become oriented) (time t3) after the selection of the main scanning line 78 is completed (time t2), the organic EL element 84 is lit. In this way, the quality of a moving image displayed on the liquid crystal panel 70 can be improved by synchronizing the vertical scanning of the liquid crystal panel 70 with the lighting and extinguishing the organic EL elements 84 to 87 of the backlight 83.

Note that reverse voltage can be applied to each extinguished organic EL element 84 to 87 by using the configuration of the third embodiment described above. Thus, a decline in the light emission intensity of the organic EL elements 84 to 87 can be inhibited.

### (Fifth Embodiment)

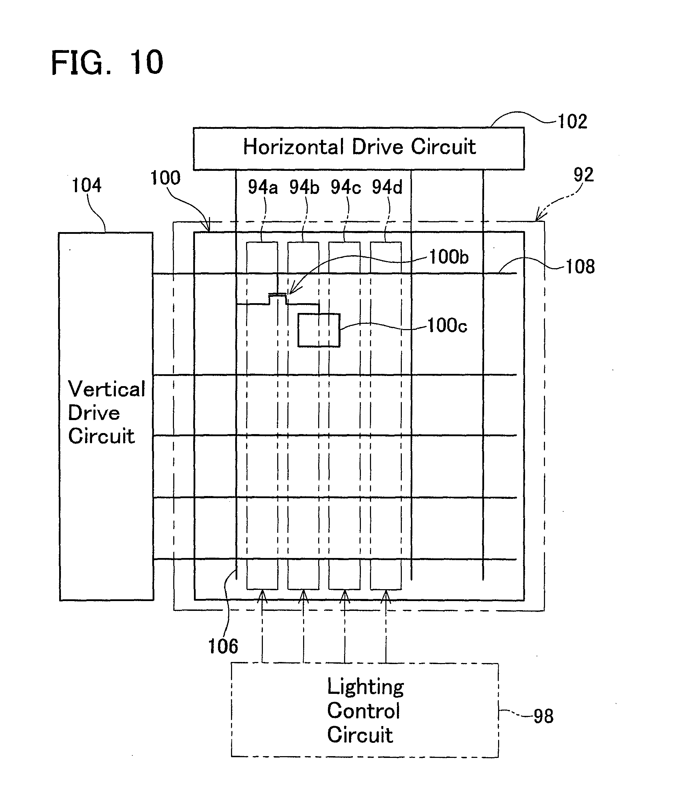

Next, a display device according to a fifth embodiment will be described. As shown in Figs. 10 and 11, the display device according to the fifth embodiment is constructed by a liquid crystal panel 100, and a backlight 92 that is arranged on the rear of the liquid crystal panel 100.
The liquid crystal panel 100 is a well known active matrix type liquid crystal display, and has a plurality of main scanning lines 108 that extend from a vertical drive circuit 104 in the horizontal direction (i.e., sub scanning direction), and a plurality of sub scanning lines (signal lines) 106 that extend from a horizontal drive circuit 102 in the vertical direction (i.e., main scanning direction). Pixel electrodes 100c are arranged via a transistor 100b at the intersection of the sub scanning lines 106 and the main scanning lines 108. Therefore, a plurality of pixel electrodes 100c are arranged on the liquid crystal panel 100 (i.e., a plurality of pixels are provided).
In order to display an image on the liquid crystal panel 100, an image signal (image data) is output from the horizontal drive circuit 102 to each signal line 106, in state in which one main scanning line 108 is selected by the vertical drive circuit 104 (i.e., a state in which a transistor 100b connected to the selected main scanning line 108 is turned on). Thus, a voltage corresponding to the image signal is applied to the pixel electrode 100c corresponding to the selected main scanning line 108, and the liquid crystal molecules of that pixel are oriented in response to the voltage applied thereto. An image is displayed on the liquid crystal panel 100 by selecting the main scanning lines 108 and outputting the image signals as described above.

The backlight 92 comprises a plurality of organic EL elements 94a, 94b, 94c, 94d, 94e,... that have strip-shaped or linear light emitting surfaces that extend in the vertical direction. As shown in Fig. 11, the plurality of organic EL elements 94a, 94b, 94c, 94d, 94e, ... are aligned in the horizontal direction with respect to one pixel 100a of the liquid crystal panel 100. Note that the configuration of the embodiments described above (e.g., the third or fourth embodiments) can be used in the configuration of the drive circuit that drives the organic EL elements 94a, 94b, 94c, 94d, 94e, .... In addition, the light emission control of the organic EL elements 94a, 94b, 94c, 94d, 94e, ... is performed by a lighting control circuit 98.

As shown in Fig. 11, a lenticular lens 96 is arranged on the front side of the liquid crystal panel 100. Therefore, an image on the liquid crystal panel 100 is made visible via the lenticular lens 96.
Here, the plurality of organic EL elements 94a, 94b, 94c, 94d, 94e, ... are aligned in the horizontal direction with respect to one pixel 100a of the liquid crystal panel 100. Because of this, the position, in which an image of the pixel 100a is visible when the organic EL element 94a is lit, is different that the position in which an image of the pixel 100a is visible when the organic EL element 94b is lit. Therefore, images displayed on the liquid crystal panel 100 can be made visible in different positions by having the lighting control circuit 98 change the lighting of the organic EL elements 94a, 94b, 94c, 94d, 94e, ... of the backlight 92. Thus, a three dimensional image can be displayed on the display device of the present embodiment. Note that the technology disclosed in Japanese Laid-open Patent Publication No. 2005-10302 can be employed in the image display control of the liquid crystal panel 100 and the lighting control of the backlight 92.

In addition, the organic EL elements 94a, 94b, 94c, 94d, 94e, ... are lit and extinguished, and reverse voltage can be applied, by means of the method disclosed in each of the above embodiments, while the elements 94a, 94b, 94c, 94d, 94e, ... are extinguished. Because of this, a decline in the light emission intensity of the organic EL elements 94a, 94b, 94c, 94d, 94e,... can be inhibited.

Finally, although the preferred embodiments have been described in detail, the present embodiments are for illustrative purpose only and not restrictive. It is to be understood that various changes and modifications may be made without departing from the spirit or scope of the appended claims. In addition, the additional features and aspects disclosed herein also may be utilized singularly or in combination with the above aspects and features.
A light emitting device (10) may comprise a constant current source (12), a first organic electroluminescent element (16), switches (14, 20), and a second organic electroluminescent element (18). The first organic electroluminescent element (16) may be connected to the constant current source (12). The switches (14, 20) may switch the direction of a voltage applied from the constant current source (12) to the first electroluminescent element (16). The second organic electroluminescent element (18) may be connected in parallel with the first organic electroluminescent element (16). When reverse voltage is applied to the first organic electroluminescent element (16), electric current from the constant current source (12) flows to the second organic electroluminescent element (18) and the second organic electroluminescent element (18) generates an electric potential.

## Claims

1. A light emitting device comprising:
a constant current source,
a first organic electroluminescent element connected to the constant current source,
switches that switch the direction of a voltage applied from the constant current source to the first electroluminescent element, and
an electric potential difference generating means connected in parallel with the first organic electroluminescent element, wherein when reverse voltage that extinguishes the first organic electroluminescent element is applied to the first organic electroluminescent element, electric current from the constant current source flows to the electric potential difference generating means and the electric potential difference generating means generates an electric potential difference.

2. A light emitting device according to claim 1, wherein the electric potential difference generating means comprises a second organic electroluminescent element, wherein an anode of the second organic electroluminescence element is connected to a cathode of the first organic electroluminescence element, and wherein a cathode of the second organic electroluminescence element is connected to an anode of the first organic electroluminescence element.

3. A light emitting device according to claim 1, wherein the electric potential difference generating means comprises a resistor.

4. A light emitting device according to claim 3, wherein the electric potential difference generating means further comprises a diode connected in series with the resistor, wherein an anode of the diode is connected to a cathode of the first organic electroluminescence element via the resistor, and wherein a cathode of the diode is connected to an anode of the first organic electroluminescence element.

5. A light emitting device according to claim 3, wherein the electric potential difference generating means further comprises a diode connected in series with the resistor, wherein an anode of the diode is connected to a cathode of the first organic electroluminescence element, and wherein a cathode of the diode is connected to an anode of the first organic electroluminescence element via the resistor.

6. A light emitting device comprising:
a plurality of organic electroluminescent elements,
a constant current source connected to each of the plurality of organic electroluminescent elements, the constant current source supplying electric current to each of the plurality of organic electroluminescent elements, and
a lighting control circuit for switching the lighting and extinguishing of each of the plurality of organic electroluminescent elements,
wherein each organic electroluminescent element is applied reverse voltage, during at least a portion of the time period in which each organic electroluminescent element is extinguished, by using forward voltage applied to another lit organic electroluminescent element.

7. A light emitting device according to claim 6, wherein two of the plurality of organic electroluminescent elements form a light emitting unit in which the two organic electroluminescent elements are connected in parallel,
wherein an anode of one of the organic electroluminescent elements of the light emitting unit is connected to a cathode of the other organic electroluminescent element, and a cathode of the one organic electroluminescent element is connected to an anode of the other organic electroluminescent element, and
wherein the lighting control circuit switches the direction of the voltage applied from the constant current source to the light emitting unit.

8. A display device comprising:
a liquid crystal panel comprising a plurality of pixels and an image signal output circuit that outputs image signals to each pixel on each main scanning line, and
a light emitting device arranged on the rear side of the liquid crystal panel in order to illuminate the liquid crystal panel, the light emitting device comprising a plurality of organic electroluminescent elements, a constant current source that supplies electric current to each of the plurality of organic electroluminescent elements, and a lighting control circuit that switches the lighting and extinguishing of the plurality of organic electroluminescent elements,
wherein each organic electroluminescent element is applied reverse voltage, during at least a portion of the time period in which each organic electroluminescent element is extinguished, by using forward voltage applied to another lit organic electroluminescent element, and
wherein the lighting control circuit (1) extinguishes the organic electroluminescent elements corresponding to one main scanning line of the liquid crystal panel to which the data is output while image signals are output to each pixel on the one main scanning line, and (2) lights the organic electroluminescent elements corresponding to the main scanning line at a predetermined timing after the output of the image signals to the main scanning line is completed.

9. A display device according to claim 8, wherein each organic electroluminescent element extends in a direction parallel to the main scanning line, and wherein the plurality of organic electroluminescent elements are aligned in a direction perpendicular to the main scanning line.

10. A display device comprising:
a plurality of organic electrolummescent elements,
a liquid crystal panel arranged on the front side of the plurality of electroluminescent elements, the liquid crystal panel comprising a plurality of pixels and an image signal output circuit that outputs image signals to each pixel on each main scanning line of the liquid crystal panel, wherein each pixel display an image via light from the plurality of organic electroluminescent elements,
a lighting control circuit that switches the lighting and extinguishing of the plurality of organic electroluminescent elements, and
a directional transparent member arranged on the front side of the liquid crystal panel, the directional transparent member directing the light from the organic electroluminescent elements through each pixel,
wherein each organic electroluminescent elements extends in a direction perpendicular to the main scanning line of the liquid crystal panel, wherein the plurality of organic electroluminescent elements are aligned in a direction parallel to the main scanning line of the liquid crystal panel, and
wherein the lighting control circuit (1) lights some of the plurality of the organic electroluminescent elements and extinguishes the remainder, and (2) applies reverse voltage to the extinguished organic electroluminescent elements, during at least a portion of the period in which the organic electroluminescent elements are extinguished, by using forward voltage applied to the other lit organic electroluminescent elements.
